# EUROPÄISCHE PATENTSCHRIFT

(11) **EP 4 267 872 B1**
(45) Veröffentlichungstag und Bekanntmachung des Hinweises auf die Patenterteilung: **28.08.2024**
(21) Anmeldenummer: 22702952.7
(22) Anmeldetag: 31.01.2022
(51) Int. Cl.: F16K 11/07, F16K 31/04, F16K 31/53, F16K 31/54, F16K 37/00, F15B 13/04

(54) **VENTILVORRICHTUNG**
VALVE DEVICE
SYSTÈME DE SOUPAPE

(30) Priorität: 13.02.2021 DE 102021000749
(43) Veröffentlichungstag der Anmeldung: 01.11.2023
(73) Patentinhaber: Hydac Mobilhydraulik GmbH, 66280 Sulzbach/Saar (DE)
(72) Erfinder: BIWERSI, Sascha Alexander, 66693 Mettlach (DE); SUMPF, Kai, 66773 Schwalbach (DE)
(74) Vertreter: Bartels und Partner, Patentanwälte
(86) Internationale Anmeldenummer: PCT/EP2022/052236
(87) Internationale Veröffentlichungsnummer: WO 2022/171478

(56) Entgegenhaltungen:
- DE-A1- 102018 207 927

## Beschreibung

Die Erfindung betrifft eine Ventilvorrichtung mit den Merkmalen im Oberbegriff von Anspruch 1.

Eine Ventilvorrichtung ist durch DE 10 2015 015 685 A1 bekannt. Zum dahingehenden Ansteuern des Ventilkolbens ist ein Elektromotor vorgesehen, mit einem Rotor und einem Stator mit Statorspulen, wobei die Antriebsachse des Elektromotors die Verfahrachse des Ventilkolbens in einem Punkt schneidet oder um maximal einen durchschnittlichen halben Durchmesser eines fiktiven Kreises durch die Mittelpunkte der Statorspulen versetzt zu diesem Punkt angeordnet ist. Bei dieser Art der Motoranordnung lässt sich eine insgesamt schmale Segmentbauweise für die Ventilvorrichtung als Ganzes erreichen, was eine Rolle spielt, wenn eine Vielzahl solcher Ventile in Nebeneinanderanordnung an Drittbauteilen, wie Bauteilen von Arbeitsmaschinen und Nutzfahrzeugen, anzubringen sind. Ferner lassen sich für diese bekannte Lösung mit Vorteil elektronisch geregelte Elektromotoren einsetzen und die bei den ansonst üblichen Schrittmotoren gegebenen Nachteile des geringen dynamischen Drehmomentes sowie der starken, erforderlichen Untersetzung mit entsprechend starker Selbsthemmung kommen dadurch in Wegfall.

Die DE 10 2018 207 927 A1 beschreibt eine Ventilvorrichtung, gemäß der Präambel von Anspruch 1, bestehend aus mindestens einem, in einem Ventilgehäuse längsverfahrbar angeordneten Ventilkolben, der mittels eines Antriebs nebst zugehörigem Antriebsstrang bewegt einzelne im Ventilgehäuse vorhandene Fluidanschlussstellen miteinander fluidführend verbindet oder voneinander trennt, wobei mittels einer Sensoreinrichtung die jeweilige Position des Antriebsstranges und damit die jeweilige Position des Ventilkolbens im Ventilgehäuse überwacht ist, wobei der Antrieb ein Elektromotor ist, wobei der Antriebsstrang zumindest eine von dem Elektromotor antreibbare Motorwelle aufweist, und wobei die Sensoreinrichtung einen Sensor aufweist, der die Motorwelle überwacht.

Ausgehend von diesem Stand der Technik liegt der Erfindung die Aufgabe zugrunde, unter Beibehalten der beschriebenen Vorteile die Ventilvorrichtung dahingehend weiter zu verbessern, dass eine sichere Positionsüberwachung für den Ventilkolben der Ventilvorrichtung erhalten ist.

Eine dahingehende Aufgabe löst eine Ventilvorrichtung mit den Merkmalen des Patentanspruches 1 in seiner Gesamtheit.

Gemäß dem Kennzeichen von Anspruch 1 ist vorgesehen, dass die Motorwelle mit ihrem einen Ende in ein Getriebe ausmündet, das mit einer Getriebewelle ein Antriebsritzel ansteuert, das mit einer Zahnstange kämmt, die mit dem Ventilkolben zusammenwirkt, und dass die Sensoreinrichtung einen Sensor aufweist, der die Getriebewelle überwacht.

Dergestalt ist eine Redundanz für die Sensoreinrichtung erreicht und der Sensor, der die Position der Getriebewelle überwacht, ermöglicht eine Detektierung einer Absolut-Position für den Ventilkolben im zugehörigen Ventilgehäuse, was den Diagnose-Deckungsgrad dadurch erhöht, dass redundante Sensoren verwendet sind, und zwar an der Motorwelle sowie an der Getriebewelle.

Dadurch, dass mittels einer Sensoreinrichtung die jeweilige Position des Antriebsstranges und damit die jeweilige Position des Ventilkolbens im Ventilgehäuse überwacht ist, lässt sich in funktionssicherer Weise die jeweilige Stellung des Ventilkolbens im Ventilgehäuse überwachen, so dass Fehlfunktionen ausgeschlossen sind. Eine dahingehend genaue Erfassung der Absolut-Position des Ventilkolbens respektive des Steuerschiebers ist für Zwecke funktionalsicherer Systeme ausgesprochen vorteilhaft, um den sogenannten Diagnose-Deckungsgrad für Fluid-Ventile, insbesondere Hydraulik-Ventile, zu vergrößern.

Von großem Vorteil ist dabei weiter, dass die Sensoreinrichtung an eine entsprechende Auswertelektronik angeschlossen werden kann, die in der Ventilvorrichtung als Ganzes integriert, direkt eine Anzeige über den Systemzustand der Ventilvorrichtung zulässt, beispielsweise in dem eine Status-LED-Anzeige in Gehäuseteilen der Ventilvorrichtung integriert ist. Ferner lassen sich Messwerte der Sensoreinrichtung im Rahmen einer elektrischen Längsverkettung mit mehreren miteinander verbundenen Ventilvorrichtungen an eine zentrale Steuer- und Auswerteeinheit weitergeben, beispielsweise im Rahmen einer zentralorganisierten Maschinensteuerung.

Der Antrieb ist ein Elektromotor und der Antriebsstrang weist zumindest eine von dem Elektromotor antreibbare Motorwelle auf, die mit ihrem einen Ende in ein Getriebe ausmündet, das mit einer Getriebewelle ein Antriebsritzel ansteuert, das mit einer Zahnstange kämmt, die mit dem Ventilkolben zusammenwirkt. Aufgrund des Getriebes lässt sich die hohe Antriebsdrehzahl des Elektromotors für das Antriebsritzel, das mit der Zahnstange des Ventilkolbens zusammenwirkt, entsprechend untersetzen, um dergestalt eine sichere Betätigung für den Ventilkolben zu ermöglichen, wozu mitbeiträgt, dass der Antriebsstrang in eine Motorwelle und eine Getriebewelle unterteilt ist. Für einen funktionssicheren Betrieb ist dabei von Vorteil, dass die Motowelle an ihrem anderen, dem Getriebe abgekehrten Ende, über den Elektromotor vorstehend, drehbar in einem Antriebsgehäuse gelagert ist.

Der jeweils zum Einsatz kommende Sensor ist ein sogenannter Hall-Sensor, der im Antriebsgehäuse aufgenommen ist und der mit der Motor- bzw. der Getriebewelle zusammenwirkt, die für einen entsprechenden Messwertabgriff jeweils einen Permanentmagneten aufweisen.

In bevorzugter Weise ist für die Untersetzung der Motordrehzahl zwecks Antrieb des Antriebsritzels für den Zahnstangentrieb des Ventilkolbens zwischen Motor- und Getriebewelle als Getriebe ein Planetenradgetriebe, vorzugsweise ein zweistufiges Planetenradgetriebe, eingesetzt.

Bei einer bevorzugten Ausführungsform der erfindungsgemäßen Ventilvorrichtung ist vorgesehen, dass der Elektromotor ein bürstenloser Gleichstrommotor ist. Die üblicherweise vorhandenen drei Phasen für den dahingehenden Gleichstrommotor können über eine entsprechende Elektronik kurzgeschlossen werden, mit der Möglichkeit kinetische Energie abzubauen, da dann der bürstenlose Gleichstrommotor als Generator fungiert. Dies ist beispielsweise dann der Fall, wenn bei voll ausgelenktem Ventilkolben oder Steuerschieber bei einer Rückstellung in eine Null- oder Ausgangsposition mittels eines Energiespeichers, regelmäßig in Form einer Druckfeder, die dahingehende Bewegung beschleunigt erfolgt. Insgesamt ergeben sich dadurch folgende wesentliche Vorteile für die Ventilansteuerung als Ganzes:
- Kommt es bei hochdynamischen Bewegungen des Motors, z. B. bei maximaler Beschleunigung in Kombination mit abruptem Spannungsverlust und damit Kontrollverlust über Motor und Elektronik, zu einem elektromechanischen Abbremsen, entspricht dies einem Fail-Safe-Betrieb für die Ventilvorrichtung.
- Im Stillstand, ohne aktive elektrische Ansteuerung, wird das Haltemoment stark vergrößert und damit eine ungewollte Ventilkolben- oder Steuerschieberbewegung unterbunden.
- Weiter besteht die Möglichkeit, neben dem direkten Kurzschließen, einen Kurzschluss über einen Leistungswiderstand zu schalten, wobei sich mittels des Widerstandswertes sich auf diese Art die Bremskraft bestimmen lässt.

Bei einer weiteren bevorzugten Ausführungsform der erfindungsgemäßen Ventilvorrichtung ist vorgesehen, dass das Ventilgehäuse und das Antriebsgehäuse eigenständige, miteinander koppelbare Gehäuseeinheiten darstellen, so dass sich im Bedarfsfall bereits ausgelieferte Ventilgehäuse mit Fluidanschlussstellen und Ventilkolben respektive Ventilschieber mit einem entsprechenden Antrieb nebst elektronischer Steuerungsüberwachung nachrüsten lassen.

Im Folgenden wird die erfindungsgemäße Ventilvorrichtung anhand eines Ausführungsbeispiels nach der Zeichnung näher erläutert. Dabei zeigen in prinzipieller und nicht maßstäblicher Darstellung die
- Fig. 1: einen Längsschnitt durch die Ventilvorrichtung als Ganzes;
- Fig. 2: einen Längsschnitt durch das Antriebsgehäuse nebst Antriebsstrang der Vorrichtung nach Fig. 1;
- Fig. 3: in der Art einer Draufsicht, einen Ausschnitt aus Fig. 2 mit einem Hall-Sensor für die Motorwelle;
- Fig. 4: einen Längsschnitt durch den Elektromotor nebst Lagerstellen zur drehbaren Führung der Motorwelle;
- Fig. 5: einen Ausschnitt aus einem zweistufigen Planetenradgetriebe mit Getriebewelle nebst zugehörigen Sensorteilen, das sich unterhalb des Elektromotors nach der Fig. 4 anschließt;
- Fig. 6: eine Ansicht auf das zweistufige Planetenradgetriebe nach der Fig. 4; und
- Fig. 7: eine perspektivische Ansicht auf das Planetenradgetriebe nach Fig. 5 mit Hohlrad.

Unter Bezugnahme auf die Zeichnung wird die erfindungsgemäße Ventilvorrichtung am Beispiel eines Wegeventiles in Form eines sogenannten Schieberventils näher erläutert. Sofern Begriffe wie "Oberseite", "Oben" und "Unterseite" sowie "Unten" verwendet werden, beziehen sich diese Angaben auf eine normale Einbaulage, wie sie in den Figuren dargestellt ist.

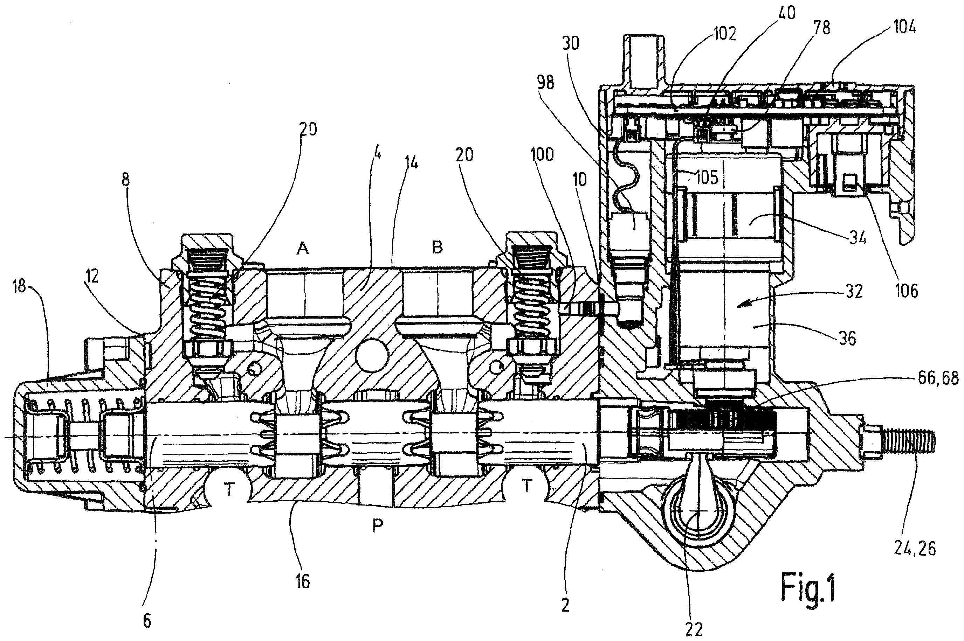

Gemäß der Darstellung nach der Fig. 1 ist ein Ventilkolben 2 respektive Schieberkolben in einem Ventilgehäuse 4 entlang einer Achse 6 längsverfahrbar geführt. Das Ventilgehäuse 4 weist paarweise einander gegenüberliegende Längsseiten 8 und Stirnseiten 10, 12 auf. Ferner verfügt das Ventilgehäuse 4 über eine Oberseite 14 und eine Unterseite 16. Die Unterseite 16, gemäß der Darstellung nach der Fig. 1, ist der einfacheren Darstellung wegen nur abgebrochen dargestellt. Entlang der Oberseite 14 münden die Nutzanschlüsse A, B aus dem Ventilgehäuse 4 aus und entlang der Unterseite 16 die beiden Tankanschlüsse T, die zwischen sich den Druckversorgungsanschluss P aufnehmen. Alle genannten Anschlüsse A, B, P, T stellen die Fluidanschlussstellen des Ventilgehäuses 4 dar.

Eine im linken Gehäuseendbereich befindliche Federanordnung 18 mit einer Druckfeder als Energiespeicher, die an die linke Stirnseite 12 des Ventilgehäuses 4 anschließt, gibt in der bei derartigen Wegeventilen üblichen Weise für den Ventilkolben 2 eine Neutral- oder Mittelstellung vor, wie sie in der Fig. 1 dargestellt ist. Des Weiteren weist das Ventilgehäuse 4 zwei sogenannte federbelastete Druckbegrenzungsventile 20 auf, die zur Absicherung bei zu hohen Drücken an dem jeweiligen Nutzanschluss A, B den

Fluidweg zum zugeordneten Tankanschluss T frei geben und insoweit einem ungewollten Druckanstieg entgegenwirken.

Verfährt in Blickrichtung auf die Fig. 1 gesehen der Ventilkolben 2 aus seiner insoweit gezeigten Neutralstellung nach rechts in eine Betätigungsstellung, wird der Druckversorgungsanschluss P für eine Fluidversorgung unter Druck mit dem Nutzanschluss A verbunden und im Rücklauf erfolgt ein Anschluss von Nutzanschluss B in Richtung des rechten Tankanschlusses T. Bei einer Auslenkung des Ventilkolbens nach links wird hingegen der Nutzanschluss B mit dem Pumpenanschluss oder Druckversorgungsanschluss P verbunden und der Nutzanschluss A mit dem linken Tankanschluss T. Dergestalt lässt sich beispielsweise ein hydraulischer Arbeitszylinder aus- und einfahren, der mit seiner Kolbenseite an den Nutzanschluss A fluidführend angeschlossen ist und mit seiner Stangenseite an den Nutzanschluss B. Dahingehende hydraulische Kreislaufführungen sind üblich, so dass an dieser Stelle hierauf nicht mehr näher eingegangen wird.

Des Weiteren verfügt die Ventilvorrichtung nach der Fig. 1 noch über eine Notbetätigung 22, die mit dem Ventilkolben 2 zusammenwirkt und beispielsweise eine Rückstellung des Ventilkolbens 2 in seine, in Fig. 1 gezeigte Ausgangs- oder Neutralstellung ermöglicht. Darüber hinaus ist noch eine Hublängenbegrenzung 24 mit zwei Stellschrauben 26, 28 für den Ventilkolben 2 vorgesehen. Auch die letztgenannte Ausgestaltung ist bei dahingehenden Ventilvorrichtungen üblich, so dass an dieser Stelle hierauf nicht mehr näher eingegangen wird.

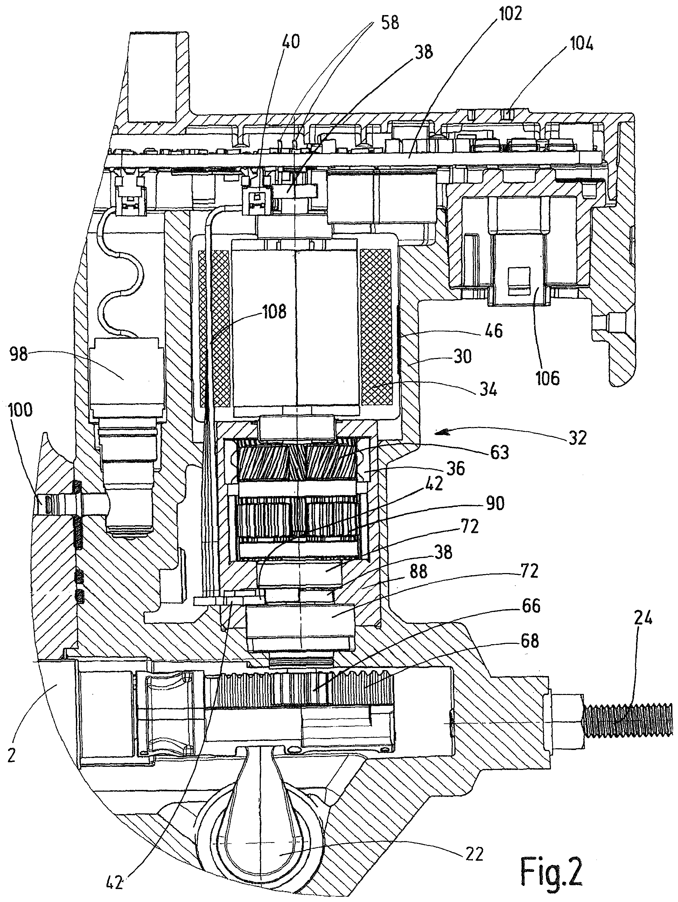

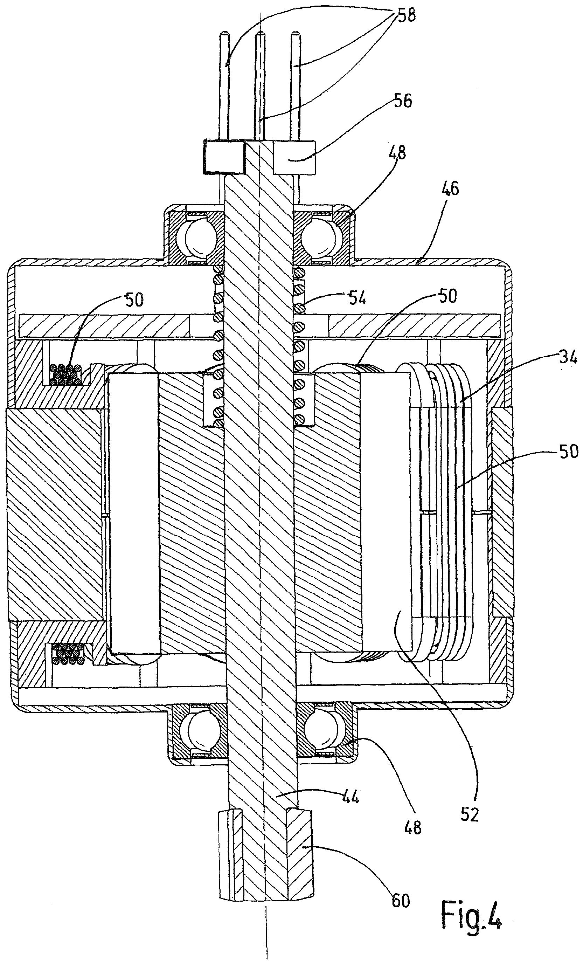

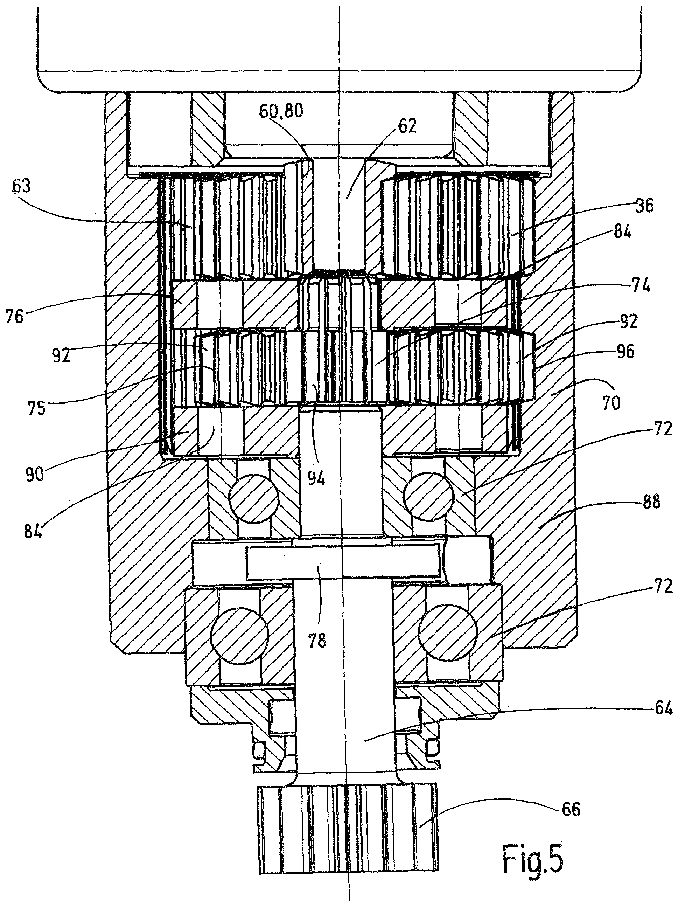

In Blickrichtung auf die Fig. 1 gesehen, schließt sich auf der rechten Stirnseite 10 des Ventilgehäuses 4 ein Antriebsgehäuse 30 an, das einen als Ganzes mit 32 bezeichneten Antriebsstrang aufnimmt. Der Antriebsstrang 32 beinhaltet unter anderem einen Elektromotor 34 als Antrieb, der vorzugsweise als bürstenloser Gleichstrommotor konzipiert ist. Die Einzelheiten des dahingehenden Elektromotors 34 sind insbesondere in der Fig. 4 dargestellt. Auf der Unterseite respektive am unteren Ende des Elektromotors 34 schließt sich ein Getriebe 36 an, insbesondere in Form eines Untersetzungsgetriebes. Das dahingehende Getriebe 36 als zweistufiges Planetenradgetriebe ist insbesondere in der Fig. 5 dargestellt. Vorzugsweise laufen alle bewegbaren Teile des Antriebsstranges 32 im Antriebsgehäuse 30 unter Öl. Des Weiteren ist eine, insbesondere in der Fig. 2 gezeigte, Sensoreinrichtung 38 vorhanden, mit zwei Sensoren in Form eines oberen Hall-Sensors 40 und in Form eines unteren Hall-Sensors 42. Die dahingehende Sensoreinrichtung 38 mit ihren beiden Hall-Sensoren 40, 42 erlaubt die jeweilige Positionsüberwachung für Teile des Antriebsstranges 32 und erlaubt damit unmittelbar einen Rückschluss auf die jeweilige Position des Ventilkolbens 2 im Ventilgehäuse 4. Wie insbesondere die Fig. 4 zeigt, weist der Antriebsstrang 32 eine von dem Elektromotor 34 antreibbare Motorwelle 44 auf. Die Motorwelle 44 mündet auf ihren beiden freien Seiten aus dem Gehäuse des Elektromotors 34 aus und ist drehbar in ihrem endseitigen Bereich in üblichen Lagerstellen 48 geführt. Der im Motorgehäuse 46 aufgenommene Elektromotor 34 weist einen in Statorspulen 50 drehbar geführten Rotor 52 auf, der mittels Federvorspannung einer Druckfeder 54 in axialer Position im Motorgehäuse 46 drehbar gehalten ist und dergestalt sein Antriebsdrehmoment an die Motorwelle 44 weitergibt. Wie die Darstellung nach der Fig. 2 zeigt, ist das kastenförmige Motorgehäuse 46 im Antriebsgehäuse 30 integriert.

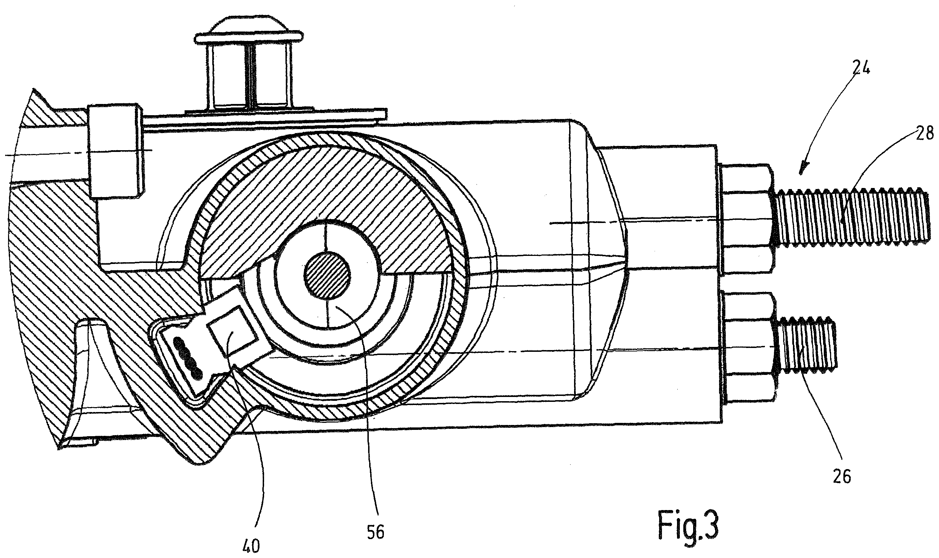

Die Motorwelle 44 weist in Blickrichtung auf die Fig. 4 gesehen an ihrem oberen Ende einen Permanentmagneten 56 auf und des Weiteren sieht man im oberen Bereich Anschlussstellen 58 in Form eines Steckerteils zwecks Stromversorgung der Statorspulen 50. An seinem dem gegenüberliegenden Ende ist die Motorwelle 44 mit einer Art Keilwellenverzahnung 60 versehen zwecks Eingriff in eine zugehörige Aufnahmestelle 62 einer oberen, ersten Planetenstufe 63 des zweistufigen Planetenradgetriebes 36. Wie insbesondere die Fig. 3 zeigt, wirkt der obere Permanentmagnet 56 mit dem im Antriebsgehäuse 30 stationär aufgenommenen oberen Hall-Sensor 40 zusammen.

In Blickrichtung auf die Fig. 5 gesehen, mündet das Getriebe 36 an ihrem unteren Ende in eine Getriebewelle 64 aus, an deren unterem Ende ein Antriebsritzel 66 angeordnet ist, das gemäß der Darstellung nach den Fig. 1 und 2 mit einer Zahnstange 68 kämmt, auf deren linker Seite sich der Ventilkolben 2, vorzugsweise in einstückiger Bauweise mit der Zahnstange 68 anschließt. Die Getriebewelle 64 ist im Getriebegehäuse 70 mit dem Getriebe 36 mittels zweier Lagerstellen 72 drehbar, aber axial unverschiebbar geführt. An ihrem, dem Antriebsritzel 66 gegenüberliegenden Ende ist die Getriebewelle 64 wiederum mittels einer Keilwellenverbindung 74 an eine zweite, untere Planetenstufe 75 des Planetenradgetriebes 36 ausgangsseitig festgelegt. Die dahingehende Keilwellenverbindung 74 ragt gemäß der Darstellung nach der Fig. 5 noch in einen mittleren Planetenträger 76 des Getriebes 36 hinein, jedoch ohne Ausübung einer Drehmomentübertragung in diesem Bereich. Zwischen den beiden Lagerstellen 72 ist ein weiterer Permanentmagnet 78 vorhanden, der drehfest mit der Getriebewelle 64 zusammenwirkt und den unteren Hall-Sensor 42 (s. Fig. 2) ansteuert.

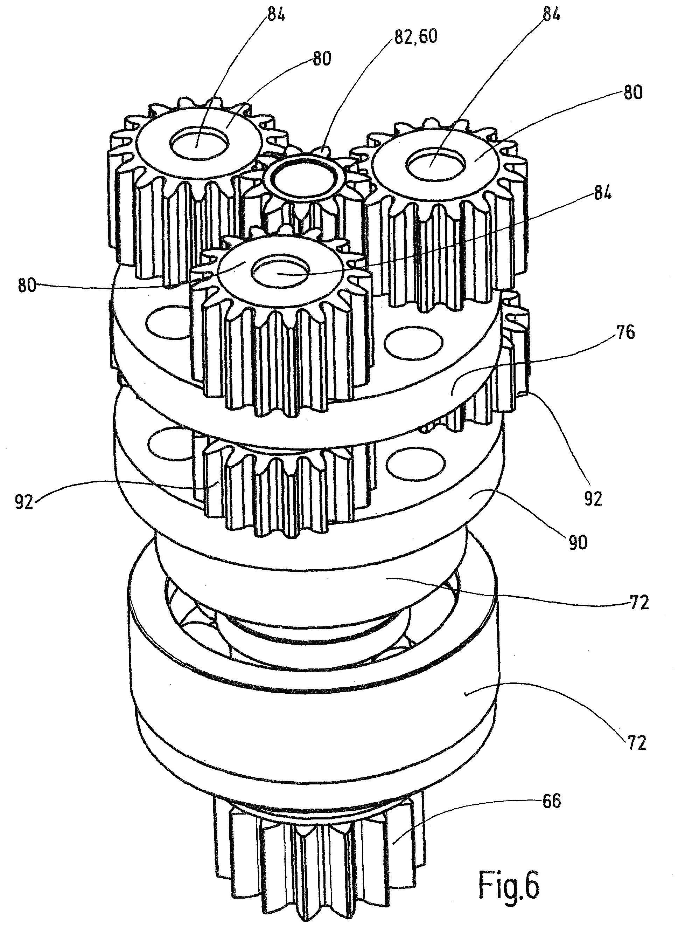

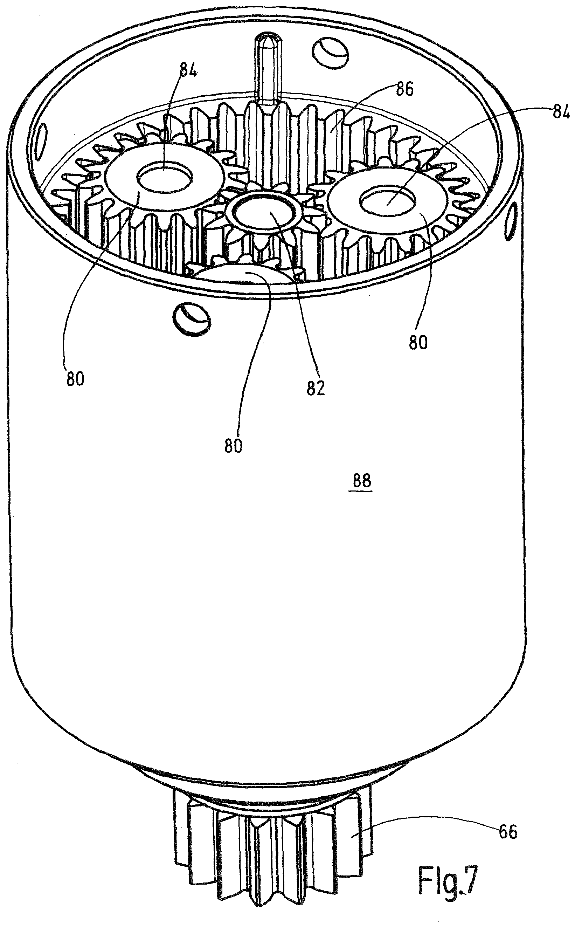

Wie insbesondere die Fig. 6 und 7 zeigen, in Verbindung mit der Fig. 5, weist das zweistufige Planetenradgetriebe 36 die erste Planetenstufe 63 mit drei Planetenrädern 80 auf, die sich um ein Sonnenrad 82 drehen, das in der Art einer Keilwellenverzahnung 60 in die Aufnahmestelle 62 der ersten Planetenradstufe 63 eingreift. Die drei Planetenräder 80 mit gleicher Verzahnung sind über Achsen 84 drehbar auf dem ersten, oberen Planetenträger 76 geführt. Ferner kämmen die drei Planetenräder 80 außenumfangsseitig gemäß der Darstellung nach der Fig. 7 in einem Hohlrad 86 ab, das gehäusefest mit der Getriebeummantelung 88 verbunden ist. Wie insbesondere die Darstellung nach der Fig. 5 zeigt, durchgreifen die einzelnen Achsen 84 den oberen Planetenträger 76 und sind bis zu einem unteren Planetenträger 90 geführt. Insoweit sind koaxial zu den drei Planetenrädern 80 drei weitere Planetenräder 92 auf den Achsen 84 drehbar geführt und erstrecken sich zwischen dem oberen Planetenträger 76 und dem unteren Planetenträger 90. Die drei weiteren Planetenräder 92 weisen jeweils eine größere Zähnezahl auf als ein Planetenrad 80 der darüberliegenden ersten Planetenstufe 63. Die drei weiteren Planetenräder 92 bilden mit ihrem zweiten Planetenträger 90 und dem mittleren Sonnenrad 94, das insoweit gleichfalls eine Art Keilwellenverbindung 74 mit den Planetenrädern 92 eingeht, die zweite Planetenstufe 75 des Getriebes 36 aus. Auch insoweit kämmen dann die drei weiteren Planetenräder 92 außenumfangsseitig entlang eines von der Zähnezahl angepassten weiteren Hohlrades 96 ab. Gemäß der Darstellung nach der Fig. 5, ist sowohl das erste Hohlrad 86 als auch das zweite Hohlrad 96 Bestandteil der Getriebeummantelung 88, die gemäß der Darstellung nach der Fig. 2 wiederum integraler Bestandteil des Antriebsgehäuses 30 ist.

Wird die Motorwelle 44 mittels des Elektromotors 34 angetrieben, treibt das zugehörige Sonnenrad 82 die drei umlaufenden Planetenräder 80 an und diese nehmen über ihre Achsen 84 die drei weiteren Planetenräder 92 in derselben Umlaufrichtung mit, wobei diese ihre dahingehende Drehbewegung an das mittlere Sonnenrad 94 der zweiten Planetenstufe 75 abtriebsseitig weitergeben, die mit der Getriebewelle 64 verbunden für den Zahnstangenantrieb des Ventilkolbens 2 das Antriebsritzel 66 drehend antreibt. Dabei laufen die jeweiligen Planetenräder 80, 92 an ihren zugeordneten Hohlrädern 86, 96 auf der Innenseite der Getriebeummantelung 88 ab. Dergestalt lassen sich sehr hohe Drehzahlen des Elektromotors in geringe Antriebsdrehzahlen für das Antriebsritzel 66 untersetzen.

Für eine dahingehende Antriebsbewegung der Zahnstange 68 nebst Ventilkolben 2 wird dann mittels des oberen Hall-Sensors 40 sowohl die Drehbewegung für die Motorwelle 44 überwacht als auch über den unteren Hall-Sensor 42 die Drehbewegung der demgegenüber untersetzt drehenden Getriebewelle 64. Da das Getriebe 36 ein definiertes Untersetzungsverhältnis vorgibt, lässt sich dergestalt eine redundante Überwachung für die Bewegung des Ventilkolbens 2 herstellen.

Des Weiteren besteht die Möglichkeit, gemäß der Darstellung nach der Fig. 1, in das Antriebsgehäuse 30 randseitig einen zusätzlichen Sensor in Form eines Drucksensors 98 aufzunehmen, der über einen Querkanal 100 den Fluiddruck im Bereich des rechten Druckbegrenzungsventils 20 überwacht.

Des Weiteren ist die Oberseite des Antriebsgehäuses von einem Deckelteil mit darin aufgenommener Platine 102 abgeschlossen. In vorteilhafter Weise ist die genannte Platine 102 waagerecht über dem Elektromotor 34 aufgenommen, so dass insoweit bauraumsparend die Positionsmessung über den oberen Hall-Sensor 40 erfolgen kann und zwar über den auf der Motorwelle 44 sitzenden Permanentmagneten 78. Weiterhin ist hierdurch eine einfache Anbindung der externen Steckerkontakte in Form der Anschlussstellen 58 realisiert, was im Rahmen einfach zu realisierender Einpresskontakte in die Platine 102 erfolgen kann. Des Weiteren verfügt die Platine 102 über eine nach außen freigelegte LED-Anzeige 104, über die sich der Betriebszustand für die gesamte Ventilvorrichtung ersehen lässt. Über eine auf der Unterseite der Platine 102 angebrachte Steckeranordnung 106, lässt sich darüber hinaus im Rahmen einer Art Längsverkettung (nicht dargestellt) verschiedene hintereinander angeordnete Ventilvorrichtungen gemäß der Darstellung nach der Fig. 1 in Segmentbauweise zentral von einer Maschinensteuerung überwachen und ansteuern.

Des Weiteren sind die beiden Hall-Sensoren 40, 42 über eine gemeinsame, elektrische Versorgungsleitung 108 miteinander verbunden.

## Patentansprüche

1. Ventilvorrichtung, bestehend aus mindestens einem, in einem Ventilgehäuse (4) längsverfahrbar angeordneten Ventilkolben (2), der mittels eines Antriebs (34) nebst zugehörigem Antriebsstrang (32) bewegt einzelne im Ventilgehäuse (4) vorhandene Fluidanschlussstellen (A, B, P, T) miteinander fluidführend verbindet oder voneinander trennt, wobei mittels einer Sensoreinrichtung (38) die jeweilige Position des Antriebsstranges (32) und damit die jeweilige Position des Ventilkolbens (2) im Ventilgehäuse (4) überwacht ist,
wobei der Antrieb (34) ein Elektromotor (34) ist,
wobei der Antriebsstrang (32) zumindest eine von dem Elektromotor (34) antreibbare Motorwelle (44) aufweist, und
wobei die Sensoreinrichtung (38) einen Sensor (40) aufweist, der die Motorwelle (44) überwacht,
**dadurch gekennzeichnet,**
**dass** die Motorwelle (44) mit ihrem einen Ende in ein Getriebe (36) ausmündet, das mit einer Getriebewelle (64) ein Antriebsritzel (66) ansteuert, das mit einer Zahnstange (68) kämmt, die mit dem Ventilkolben (2) zusammenwirkt, und
**dass** die Sensoreinrichtung (38) einen Sensor (42) aufweist, der die Getriebewelle (64) überwacht.

2. Ventilvorrichtung nach Anspruch 1, **dadurch gekennzeichnet, dass** die Motorwelle (44) an ihrem anderen, dem Getriebe (36) abgekehrten Ende, über den Elektromotor (34) vorstehend, drehbar in einem Antriebsgehäuse (30) gelagert ist.

3. Ventilvorrichtung nach Anspruch 1 oder 2, **dadurch gekennzeichnet, dass** der Sensor (40) der die Motorwelle (44) überwacht stationär im Antriebsgehäuse (30) aufgenommen ist und den Teil der Motorwelle (44) überwacht, die mit ihrem anderen Ende über den Elektromotor (34) nach oben hin vorsteht.

4. Ventilvorrichtung nach einem der vorstehenden Ansprüche, **dadurch gekennzeichnet, dass** der Sensor (42), der die Getriebewelle (64) überwacht stationär im Antriebsgehäuse (30) aufgenommen ist und den Teil der Getriebewelle (64) überwacht, der in Richtung des Antriebsritzels (66) für die Zahnstange (68) nach unten hin über den Elektromotor (34) vorsteht.

5. Ventilvorrichtung nach einem der vorstehenden Ansprüche, **dadurch gekennzeichnet, dass** der jeweilige Sensor ein Hall-Sensor (40, 42) ist, der mit der Motor- (44) und/oder der Getriebewelle (64) zusammenwirkt, die für einen Messwertabgriff einen Permanentmagneten (56; 78) aufweist.

6. Ventilvorrichtung nach einem der vorstehenden Ansprüche, **dadurch gekennzeichnet, dass** für die Untersetzung der Motordrehzahl zwecks Antrieb des Antriebsritzels (66) für den Zahnstangentrieb (68) des Ventilkolbens (2) zwischen Motor (44) - und Getriebewelle (64) als Getriebe (36) ein Planetenradgetriebe, vorzugsweise ein zweistufiges Planetenradgetriebe, eingesetzt ist.

7. Ventilvorrichtung nach einem der vorstehenden Ansprüche, **dadurch gekennzeichnet, dass** der Elektromotor (34) ein bürstenloser Gleichstrommotor ist.

8. Ventilvorrichtung nach einem der vorstehenden Ansprüche, **dadurch gekennzeichnet, dass** das Ventilgehäuse (4) und das Antriebsgehäuse (30) eigenständige miteinander koppelbare Gehäuseeinheiten darstellen.

## Claims

1. Valve apparatus consisting of at least one valve piston (2) arranged in a valve housing (4) such that it can be displaced longitudinally, said valve piston being moved by means of a drive (34) along with an associated drive train (32) and connecting or separating individual fluid connection points (A, B, P, T) present in the valve housing (4) to or from one another,
wherein, by means of a sensor device (38), the respective position of the drive train (32) and thus the respective position of the valve piston (2) in the valve housing (4) is monitored,
wherein the drive (34) is an electric motor (34),
wherein the drive train (32) comprises a motor shaft (44) that can be driven by the electric motor (34), and
wherein the sensor device (38) comprises a sensor (40), which monitors the motor shaft (44),
**characterised in that**
the motor shaft (44) emerges with one of its ends in a gear unit (36), which controls a drive pinion (66) with a gear shaft (64), said drive pinion meshing with a toothed rack (68), which interacts with the valve piston (2), and
**in that** the sensor device (38) comprises a sensor (42), which monitors the gear shaft (64).

2. Valve apparatus according to claim 1, **characterised in that** the motor shaft (44) is rotatably mounted at its other end facing away from the gear unit (36), protruding beyond the electric motor (34), in a drive housing (30).

3. Valve apparatus according to either claim 1 or claim 2, **characterised in that** the sensor (40) that monitors the motor shaft (44) is received in a stationary manner in the drive housing (30) and monitors the part of the motor shaft (44) that protrudes upwards beyond the electric motor (34) with its other end.

4. Valve apparatus according to any of the preceding claims, **characterised in that** the sensor (42) that monitors the gear shaft (64) is received in a stationary manner in the drive housing (30) and monitors the part of the gear shaft (64) that protrudes downwards beyond the electric motor (34) in the direction of the drive pinion (66) for the toothed rack (68).

5. Valve apparatus according to any of the preceding claims, **characterised in that** the respective sensor is a Hall sensor (40, 42), which acts with the motor (44) and/or the gear shaft (64), which comprises a permanent magnet (56; 78) for recording measured values.

6. Valve apparatus according to any of the preceding claims, **characterised in that** a planetary gear, preferably a two-stage planetary gear, is used as a gear unit (36) for the purpose of reducing the motor speed to drive the drive pinion (66) for the rack- and-pinion drive (68) of the valve piston (2) between the motor (44) and gear shaft (64).

7. Valve apparatus according to any of the preceding claims, **characterised in that** the electric motor (34) is a brushless direct current motor.

8. Valve apparatus according to any of the preceding claims, **characterised in that** the valve housing (4) and the drive housing (30) represent independent housing units that can be coupled together.

## Revendications

1. Système de soupape constitué au moins d'un piston (2) de soupape, qui est monté avec possibilité de se déplacer longitudinalement dans un corps (4) de soupape, qui se déplace au moyen d'un entraînement (34) conjointement avec une chaîne (32) cinématique lui appartenant et qui met en communication fluidique entre eux des points (A, B, P, T) de raccordement de fluide présents dans le corps (4) de la soupape ou les sépare les uns des autres, dans lequel, au moyen d'un dispositif (38) capteur, la position respective de la chaîne (32) cinématique et ainsi la position respective du piston (2) de la soupape dans le corps (4) de la soupape est contrôlé,
dans lequel l'entraînement (34) est un moteur (34) électrique,
dans lequel la chaîne (32) cinématique a au moins un arbre (44) de moteur pouvant être entraîné par le moteur (34) électrique et
dans lequel le dispositif (38) capteur a un capteur (40), qui contrôle l'arbre (44) du moteur,
**caractérisé**
**en ce que** l'arbre (44) du moteur débouche par l'un de ses bouts dans un engrenage (36), qui commande par un arbre (64) d'engrenage un pignon (66) d'entraînement, lequel engrène avec une crémaillère (68), qui coopère avec le piston (2) de la soupape, et
**en ce que** le dispositif (38) capteur a un capteur (42), qui contrôle l'arbre (64) de l'engrenage.

2. Système de soupape suivant la revendication 1, **caractérisé en ce que** l'arbre (44) du moteur est, à son autre bout non tourné vers l'engrenage (36), monté tournant dans un carter (30) de l'entraînement en saillie du moteur (34) électrique.

3. Système de soupape suivant la revendication 1 ou 2, **caractérisé en ce que** le capteur (40), qui contrôle l'arbre (44) du moteur, est reçu de manière fixe dans le carter (30) de l'entraînement et contrôle la partie de l'arbre (44) du moteur qui, par son autre bout, est vers le haut en saillie du moteur (34) électrique.

4. Système de soupape suivant l'une des revendications précédentes, **caractérisé en ce que** le capteur (42), qui contrôle l'arbre (64) de l'engrenage, est reçu de manière fixe dans le carter (30) de l'entraînement et contrôle la partie de l'arbre (64) de l'engrenage, qui est en saillie vers le bas du moteur (34) électrique dans la direction du pignon (66) d'entraînement de la crémaillère (68).

5. Système de soupape suivant l'une des revendications précédentes, **caractérisé en ce que** le capteur respectif est un capteur (40, 42) de Hall, qui coopère avec le moteur (44) et/ou avec l'arbre (64) de l'engrenage, qui a, pour un prélèvement de valeur de mesure, un aimant (56; 78) permanent.

6. Système de soupape suivant l'une des revendications précédentes, **caractérisé en ce que**, pour démultiplier la vitesse de rotation du moteur en vue de l'entraînement du pignon (66) d'entraînement de l'entraînement (68) à crémaillère du piston (2) de la soupape, il est inséré, entre le moteur (44) et l'arbre (64) de l'engrenage, comme engrenage (36), un engrenage à roue planétaire, de préférence un engrenage à roue planétaire à deux étages.

7. Système de soupape suivant l'une des revendications précédentes, **caractérisé en ce que** le moteur (34) électrique est un moteur à courant continu sans balais.

8. Système de soupape suivant l'une des revendications précédentes, **caractérisé en ce que** le corps (4) et le carter (30) de l'entraînement représentent des unités autonomes pouvant être assemblées l'une à l'autre.
